# EUROPEAN PATENT APPLICATION

(11) **EP 0 673 744 A1**
(43) Date of publication of application: **27.09.1995**
(21) Application number: 95103158.2
(22) Date of filing: 06.03.1995
(51) Int. Cl.: B29C 45/17, F16D 1/02

(54) **Plasticizing screw with threaded coupling**

(30) Priority: 07.03.1994 US 206611
(71) Applicant: HUSKY INJECTION MOLDING SYSTEMS LTD., Bolton Ontario L7E 5S5 (CA)
(72) Inventor: Julinot, Helmut Dietmar, Toronto, Ontario, M4R 1E7 (CA)
(74) Representative: Weiss, Peter, Dr. rer. nat.

(57) **Abstract**

The present invention relates to a mechanism for coupling a plasticizing feed screw (10) to a drive unit of an injection molding machine. The coupling mechanism is formed by a threaded end portion (14) on the plasticizing screw (10) and a mating threaded bore (24,28) within the quill (20) of the drive unit. A method for installing and removing the feed screw from the drive unit is described as well.

## Description

### BACKGROUND OF THE INVENTION

The present invention relates to a plasticizing feed screw for an injection molding machine and in particular to an improved mechanism for coupling the plasticizing screw to a drive unit of an injection molding machine and an improved method of installing and removing the plasticizing screw from the injection molding machine.

In plastic injection molding, it is frequently necessary to change resins that are processed on a particular molding machine. This is normally done by purging the old resin through the plasticising unit. This is a wasteful process in terms of time, energy and resin.

In order to avoid this waste, the entire plasticizing unit, including the barrel screw and the drive unit, is exchanged when changing from one resin to another. This allows a clean, preheated set of components to be installed with little machine downtime required for purging and conditioning.

U.S. Patent No. 4,588,365 to Holzschuh discloses an injection molding machine where the screw, barrel and drive are exchanged as a unit to reduce the time required for a change from one material to another. The Holzschuh injection molding machine accomplishes this by providing two plasticizing units complete with drives. The two plasticizing units are shuttled into and out of alignment with the injection axis of the molding machine from either side of the machine. Although this invention allows quick changes, it requires substantially more floor space since provision must be made on each side of the machine for one of the plasticizing units. There is also an unnecessary and costly duplication of the drive unit since it is not in direct contact with the resin and therefore needs no attention due to resin changes.

U.S. Patent Nos. 4,704,078 and 4,708,622, both to Hehl, show one approach for incorporating a quick barrel change system into a small injection molding machine. An injection molding machine is disclosed in these patents which has an exchangeable plasticizing unit comprising a plasticizing cylinder and a feed screw. The drive unit includes a spindle for imparting rotation as well as an axial shifting motion to the feed screw. A coupling assembly is provided for operatively connecting and disconnecting the spindle of the drive unit to and from the feed screw of the plasticising unit. Figure 8 in the '078 patent shows a coupling assembly for coupling the drive motor to the feed screw and for supplying torque to the drive screw through a drive dog. The main disadvantage of this drive dog approach is that it is not suitable for large machines where the power being transmitted from the drive motor to the screw is on the order of 50 hp or greater. This is because the drive dog design is not sufficiently strong.

German Offenlegungsschrift 32 29 223 illustrates four species of hydraulic couplings for connecting and disconnecting a plasticizing unit of an injection molding machine to a drive unit. The primary disadvantage associated with all of these species of hydraulic couplings is that they require a supply of pressurized hydraulic fluid to act on the screw connector in order to disengage the connector and allow for automatic screw removal. In order to supply the necessary pressurized hydraulic fluid, a complicated arrangement of seals and channels are required throughout the plasticizing unit and drive unit. The requirement for rotating seals complicates and reduces the reliability of the coupling system.

Still another system is illustrated in U.S. Patent No. 5,011,396 to Cosman. In this system, a female spline in a recess on an end of the quill of the drive unit mates with a male spline on an end of the feed screw for transmission of the required torque. Axial movement is prevented by a locking collar with the same female spline being used for rotationally driving the screw. The locking collar slides over and past the male spline on the end of the screw. The collar is then threaded into another recess on the end of the quill to prevent axial movement of the screw relative to the quill. The collar consists of two parts which allow an inner spline portion to rotate relative to an outer male threaded portion. A detent mechanism between the collar sections allows the two collar sections to be fixed relative to each other in one of two positions, the first being where the splines on the end of the screw line up with the splines of the collar and the second where these two splines do not line up. The main disadvantage of this approach is that alignment and engagement of the splines requires exact relative positioning of the screw and quill. Such a system would be complicated to automate. Additionally, the design itself is complicated by the number of pieces required for it to operate and the precision required in manufacturing each component.

Conventional coupling devices such as those discussed above allow transmission of torque in either a clockwise or counterclockwise direction. In the majority of applications, this bi-directional torque transmission capability is not required since the helical flights on substantially all screws are in only one direction. There are some instances where reversing the screw is desirable but these are not very common and relate to specialized needs.

It remains highly desirable to have a coupling mechanism for coupling the plasticizing unit of an injection molding machine to the drive unit which is simple in construction and operation, and strong enough to transmit the required torque.

### SUMMARY OF THE INVENTION

Accordingly, it is an object of the present invention to provide an improved coupling mechanism for coupling the plasticizing unit of an injection molding machine to the drive unit.

It is a further object of the present invention to provide an improved coupling mechanism as above which is simple in construction and operation and strong enough to transmit the required torque.

It is a further object of the present invention to provide an improved coupling mechanism as above which has self aligning and self engaging threaded portions.

Still another object of the present invention is to provide an improved method for installing and removing a plasticizing screw on an injection molding machine.

Still other objects and advantages will become clearer from the following description and drawing.

The foregoing objects are attained by the coupling mechanism of the present invention and the instant method for installing and removing a plasticizing screw in an injection molding machine.

In accordance with the present invention, an improved coupling mechanism for connecting a plasticizing feed screw to a drive unit of an injection molding machine is provided. The coupling mechanism is formed by the plasticizing screw having an end portion adapted to be received within a bore in a drive unit quill and wherein the end portion has a first threaded portion, and the bore has a second threaded portion for engaging the first threaded portion. In a preferred embodiment of the coupling mechanism, the first threaded portion comprises a tapered male thread and the second threaded portion comprises a tapered female thread. The use of tapered thread promotes self alignment and self engagement of the threads during the installation process. Additionally, the locking or wedging properties of the tapered threads make end face contact unnecessary. In another embodiment, the first and second threaded portions comprises a straight male thread and a mating straight female thread. In this embodiment, the taper at the end of the feed screw and the taper on the end of the female thread assist in the alignment of the screw and the drive unit quill.

To install the plasticizing screw of the present invention, the screw is first restrained from longitudinal and rotational movement. The drive unit quill is then moved axially so that an end face thereof passes an end face of the plasticizing screw. The drive unit is rotated as it is being moved axially. Rotation of the drive unit causes the first and second threaded portions to engage. Rotation of the drive unit is preferably continued until the end face of the plasticizing screw comes in close proximity to but spaced from or alternatively, contacts a substantially flat bottom face of the bore in the drive unit quill.

To remove the plasticizing screw from the drive unit in order to replace it, the plasticizing screw is again restrained against rotation. The rotational direction of the drive unit quill is then reversed so as to disengage the threaded portions.

Other details of the coupling mechanism of the present invention and the method for installing and removing the plasticizing screw from the drive unit are described in more detail hereinafter.

### BRIEF DESCRIPTION OF THE DRAWINGS

FIG. 1 illustrates a coupling mechanism in accordance with the present invention;
FIG. 2 illustrates an alternative embodiment of the coupling mechanism of the present invention where the end face of the screw contacts the flat bottom face of the bore; and
FIG. 3 illustrates yet another embodiment of the coupling mechanism of the present invention wherein straight mating threads are utilized.

### DETAILED DESCRIPTION

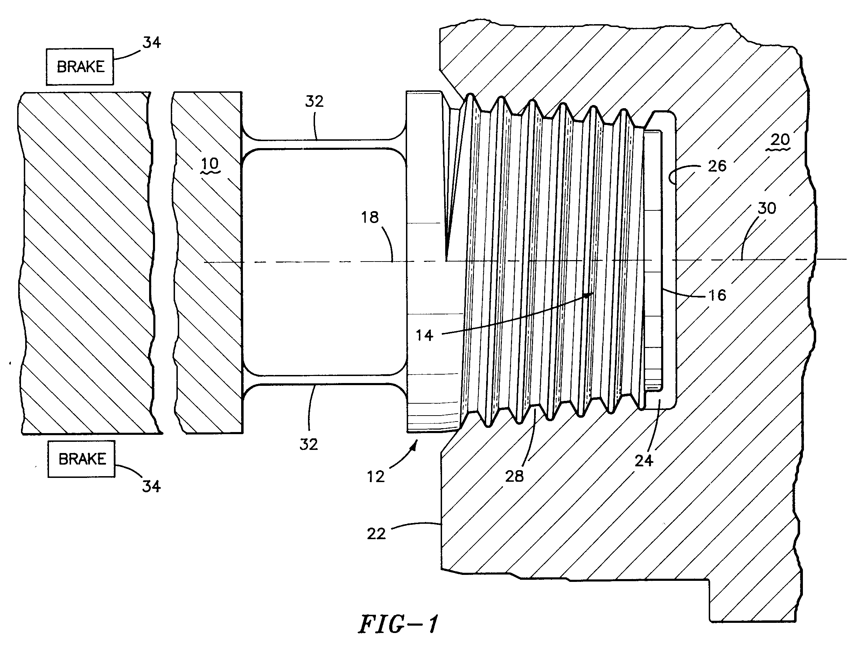

Referring now to the drawings, FIG. 1 illustrates a coupling mechanism in accordance with the present invention. Other components of an injection molding machine which are well known in the art are not described herein or illustrated in the drawings. As shown in FIG. 1, a plasticizing feed screw 10 has an end portion 12 with a threaded portion 14 and an end face 16. The threaded portion 14 may be formed by either a single or multi-flight male thread or a single or multi-flight female thread. Preferably, the threaded portion 14 has a tapered single flight male thread. The screw preferably has a longitudinal axis 18 which coincides with the longitudinal axis of the thread 14.

The drive unit (not shown) has a quill 20 with an end face 22 and a blind bore 24 machined therein. The blind bore preferably has a substantially flat bottom face 26 and a threaded portion 28. The longitudinal axis 30 of the blind bore 24 preferably coincides with the longitudinal axis of the drive unit quill 20. Again, the threaded portion 28 may be formed by either a single or multi-flight male thread or a single or multi-flight female thread having a thread profile which matches that of the threaded portion 14. Preferably, the threaded portion 28 has a tapered single flight female thread.

Tapered threads are preferred for the threaded portions 14 and 28 so that the threads are self aligning and self engaging during the engagement or installation process. Tapered threads are also desirable because they are able to tolerate a small misalignment of the screw 10 and the quill 20. Still further, the locking or wedging properties of the tapered threads make end face contact unnecessary. Therefore, when installed, end face 16 may be spaced from the substantially flat bottom face 26.

In the embodiment of FIG. 1, torque and axial forces are transmitted through the engagement of the tapered male thread and the matching tapered female thread.

The screw 10 also has at least one wrench flat 32 for manual operation of the coupling mechanism.

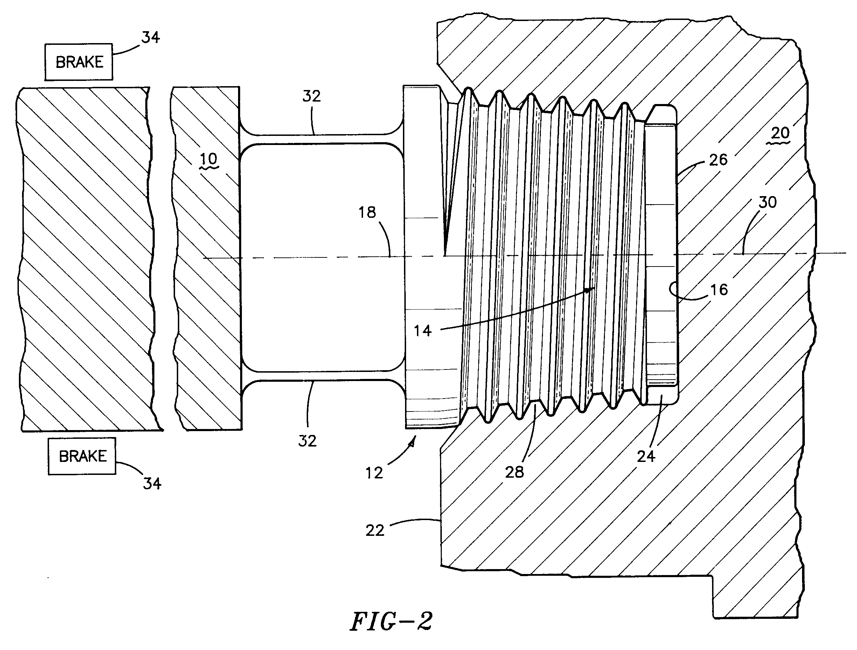

FIG. 2 illustrates an alternative coupling mechanism wherein the feed screw and the quill of the drive unit are identical to that shown in FIG. 1; however the end face 16 of the screw 10 abuts or contacts the substantially flat bottom face 26 of the bore 24 in the quill 20. This type of coupling mechanism is useful in those situations where it is desired to transmit compression forces using the end face 16 of the screw.

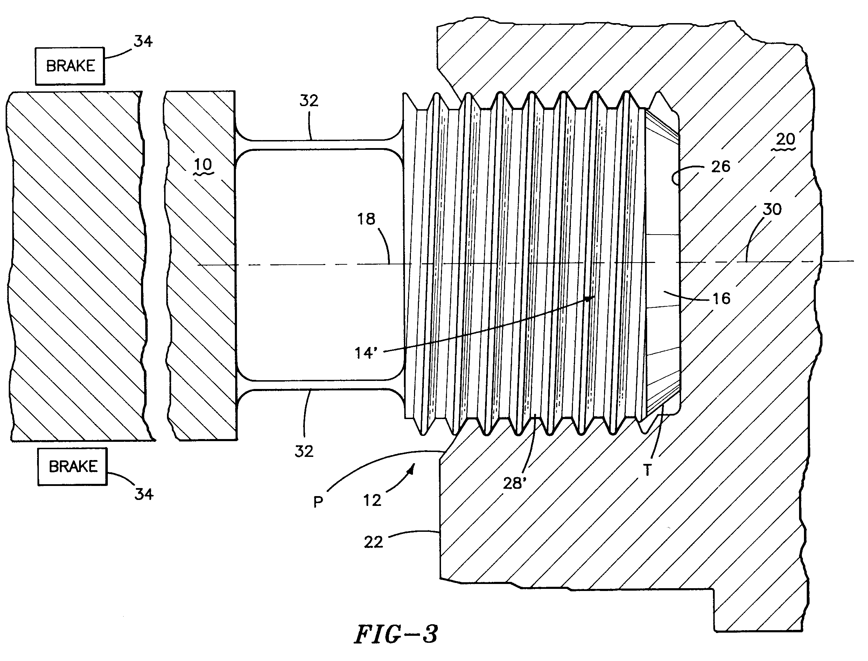

FIG. 3 illustrates yet another embodiment wherein a straight mating thread arrangement is used. In this embodiment, feed screw 10 has a straight thread arrangement 14' and the bore 24 in the quill has a mating straight thread 28'. The taper **T** at the end of the screw 10 and the taper **P** on the end of the female thread serve to assist in the alignment of the screw 10 and the quill 20.

To install and engage the screw 10 within the quill 20 in either the embodiment of FIG. 1, FIG. 2 or FIG. 3, the screw 10 is first prevented from longitudinal or rotatable movement using any suitable means known in the art. For example, the screw may be prevented from longitudinal or rotational movement by either a manual or automatic friction brake 34. Injection molding drive unit quill 20, while being rotated in a first, normal operating direction relative to the feed screw and the axis 30, is advanced forward toward the end face 16 of the feed screw 10. Any convenient and conventional means known in the art (not shown), such as a hydraulic cylinder, pneumatic racks and pinions, or ball screws driven by electric hydraulic or pneumatic motors, may be used to move the quill 20 forward and to rotate the quill 20 relative to the feed screw. As the end face 22 of the drive unit quill longitudinally moves past the feed screw end face 16, threaded portion 28 engages threaded portion 14. Rotation of the quill relative to the feed screw in the first, normal operating direction causes the substantially flat bottom face 26 of the bore 24 to be drawn towards the end face 16 of the screw. Rotation of the quill is normally continued until the tapered threads wedge together and hold the faces 16 and 26 are spaced apart a desired distance. The desired separation distance is determined by the geometry of the tapered thread. If desired, however, rotation of the quill may be continued until the faces 16 and 26 contact or abut each other. This is possible in the embodiments of both FIG. 2 AND FIG. 3. The means for restraining the plasticizing feed screw 10 against longitudinal and rotational movement is then released allowing feed screw 10 to rotate with the drive unit. The torque required to turn screw 10 as resin is plasticized tends to maintain the engagement of the threaded portions 14 and 28.

In the embodiments shown in FIG. 2 and FIG. 3, when the faces 16 and 26 are in an abutting relationship, further engagement rotation between the quill 20 and the screw 10 is prevented by the mating threaded portions forcing end face 16 against the bottom face 26.

Disengagement or removal of the screw 10 from the drive unit quill 20 is accomplished by again first restraining the screw 10 from rotating. Brake means 34 or any other suitable means known in the art may be used to restrain the screw 10. Thereafter, the direction of rotation of the drive unit about the axis 30 is reversed. This reversal initiates disengagement of the threaded portions 14 and 28 and unscrewing of the quill 20 from the screw 10. The torque required to release and unscrew the coupling mechanism of the present invention is substantially small compared to the torque required to drive the screw 10 during plastification of the resin.

Under certain conditions, it may be possible to disengage the screw from the quill without using the brake 34 by using the torque required to reverse the screw to break the engagement.

The high axial compressive forces during injection acting on the coupling are easily accommodated by the engagement of the threaded portions 14 and 28 in the embodiment of FIG. 1 and, in the embodiment of FIG. 2 and FIG. 3, by the relatively large area of the end face 16 acting on the bottom face 26. The infrequent and substantially lower tensile forces acting on the coupling mechanism are easily accommodated by the engagement of the threaded portions 14 and 28 in FIGS. 1, 2 and 3, although the apparatus is capable of transmitting very high, but somewhat lower tensile forces.

The coupling mechanism of the present invention has the advantage that it is self aligning and self engaging through conventional operation of the injection molding machine. There are no additional moving parts or modifications to the machine required to operate the coupling mechanism. Very high torque and axial forces can be transmitted with the current invention. An additional benefit of the instant invention is that it is highly reliable by virtue of its simplicity and self engagement maintaining feature. Automation of screw and quill coupling and decoupling is extremely simple as a result of the simplicity of the invention.

It is apparent that there has been provided in accordance with this invention a plasticizing screw with threaded coupling which fully satisfies the objects, means, and advantages set forth hereinbefore. While the invention has been described in combination with specific embodiments thereof, it is evident that many alternatives, modifications, and variations will be apparent to those skilled in the art in light of the foregoing description. Accordingly, it is intended to embrace all such alternatives, modifications, and variations as fall within the spirit and broad scope of the appended claims.

## Claims

1. A mechanism for coupling a plasticizing screw (10) to a drive unit of an injection molding machine, said mechanism comprising:
said plasticizing screw (10) having an end portion (12) to be received within a bore (24) in a drive unit quill (20);
said end portion (24) having a first threaded portion (14, 14');
said bore (24) in said drive unit quill (20) having a second threaded portion (28, 28') for engaging said first threaded portion (14, 14');
said first and second threaded portions (14, 14'; 28, 28') accomodating tensile forces which act on said coupling mechanism; and
means for accomodating axial compression forces acting on said coupling mechanism during injection of a plastic material.

2. The coupling mechanism of claim 1 wherein each of said threaded portions (14, 28) comprises a tapered thread so as to promote self alignment of the threads, said tapered threads acting as said means for accommodating said axial compression forces acting on said coupling mechanism.

3. The coupling mechanism of claim 2 wherein each of said threads has a single flight or multiple flights.

4. The coupling mechanism of one of claims 1 - 3 further comprising:
said end portion (12) of said plasticizing screw (10) having an end face (16);
said bore (24) in said drive unit quill (20) having a substantially flat bottom face (26); and
said end face (16) and said bottom face (26) being spaced apart when said plasticizing screw (10) is in an operating position.

5. The coupling mechanism of claims 1 - 3 wherein said axial compression force accommodating means comprises
said end portion (12) of said plasticizing screw (10) having an end face (16);
said bore (24) in said drive unit quill (20) having a substantially flat bottom face (26); and
said end face (16) and said bottom face (26) abutting each other when said plasticizing screw (10) is in an operating position,
whereby said axial compression forces acting on the coupling machenism during said injection of said plastic material are accommodated by said end face (16) acting on said bottom face (26).

6. The coupling mechanism of at least one of claims 1 - 5 wherein said first threaded portion (14) comprises a male thread and said second threaded portion (28) comprises a female thread, and further comprising said plasticising screw (10) having a longitudinal axis (18) which coincides with a longitudinal axis of said male thread.

7. The coupling mechanism of at least one of claims 1 - 5 wherein each of said threaded portions (14') comprises a straight thread and wherein said end portion (12) has a tapered end portion (T) and said second portion (28') has a tapered end (P) which assist in alignment of said screw (10) and said quill (20), further comprising said bore (24) having a longitudinal axis (30) and said drive unit quill (20) having a longitudinal axis coinciding with the longitudinal axis (30) of said bore (24).

8. The coupling mechanism of at least one of claims 1 - 7 wherein said end portion (12) of said plasticizing screw (10) has at least one flat portion (32) for accommodating a wrench during manual operation of said coupling mechanism.

9. A method for installing and removing a plasticizing screw (10) in an injection molding machine, said method comprising the steps of:
(a) providing a drive unit quill (20) having a threaded bore (24);
(b) restraining a plasticizing screw (10) having a threaded end portion (14, 14') from longitudinal and rotational movement;
(c) moving said drive unit quill (20) until an end face (22) thereof passes an end face (16) on said plasticizing screw (10); and
(d) rotating said drive unit quill (20) in a first direction until said threaded bore (24) engages said threaded end portion (14, 14') of said plasticizing screw (10),
wherein steps (c) and (d) may optionally be performed simultaneously.

10. The method of claim 9 further comprising:
(e) continuing rotation of said drive unit quill (20) relative to said plasticizing screw (10) until said end face (16) of said plasticizing screw (10) is spaced a desired distance from a bottom face (26) of said threaded bore (24); and
(f) releasing said plasticizing screw (10) so that it is free to rotate after said plasticizing screw (10) has reached a position where said faces (16, 26) are spaced apart said desired distance.

11. The method of claim 9 further comprising:
(e) continuing rotation of said drive unit quill (20) relative to said plasticizing screw (10) until said end face (16) of said plasticizing screw (10) contacts a bottom face (26) of said threaded bore (24); and
(f) releasing said plasticizing screw (10) so that it is free to rotate after said plasticizing screw end face (16) has contacted said bottom face (26).

12. The method of one of claims 9 - 11 further comprising:
(g) disengaging and removing said plasticizing screw (10) from said drive unit quill (20);
said disengaging and removing step comprising (h) restraining said plasticizing screw (10) from rotation and reversing the rotational direction of said drive unit quill (20) until said threaded end portion (14, 14') on said plasticizing screw (10) is disengaged from said threaded bore (24); and
wherein said restraining of said plasticizing screw (10) is accomplished by applying a braking force to said plasticizing screw (10) with a friction brake (34).
